# EUROPEAN PATENT APPLICATION

(11) **EP 4 622 328 A1**
(43) Date of publication of application: **24.09.2025**
(21) Application number: 23903890.4
(22) Date of filing: 08.12.2023
(51) Int. Cl.: H04W 24/10, H04W 8/24, H04W 76/27, G08G 5/00

(54) **METHOD AND APPARATUS FOR UPDATING FLIGHT PATH IN NEXT GENERATION MOBILE COMMUNICATION SYSTEM**

(30) Priority: 16.12.2022 KR 20220177277
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR); LEE, Taeseop, Suwon-si, Gyeonggi-do 16677 (KR)
(74) Representative: Nederlandsch Octrooibureau
(86) International application number: PCT/KR2023/020151
(87) International publication number: WO 2024/128687

(57) **Abstract**

The disclosure relates to a 5G or 6G communication system for supporting higher data transmission rates. Specifically, the disclosure provides a method and an apparatus for updating a flight path. A method performed by a terminal according to an embodiment of the disclosure comprises the steps of: transmitting, to a base station, a user assistance information (UAI) message including information indicating that flight path information exists; receiving a first message for requesting the flight path information from the base station; and transmitting a second message for reporting the flight path information to the base station.

## Description

### [Technical Field]

The disclosure relates to the communication field and relates to operations of a terminal and a base station. Specifically, the disclosure relates to a method for updating a flight path and a terminal, a base station, and a communication system related thereto.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments set forth herein are to provide an apparatus and a method capable of effectively providing services in a wireless communication system.

### [Solution to Problem]

A method performed by a terminal according to an embodiment includes transmitting a user assistance information (UAI) message including information indicating that flight path information is available to a base station, receiving a first message for requesting the flight path information from the base station, and transmitting a second message for reporting the flight path information to the base station.

A method performed by a base station according to an embodiment of the disclosure includes receiving a user assistance information (UAI) message including information indicating that flight path information is available from a terminal, transmitting a first message for requesting the flight path information to the terminal, and receiving a second message for reporting the flight path information from the terminal.

### [Advantageous Effects of Invention]

The disclosure provides an apparatus and a method capable of effectively providing services in a wireless communication system.

### [Brief Description of Drawings]

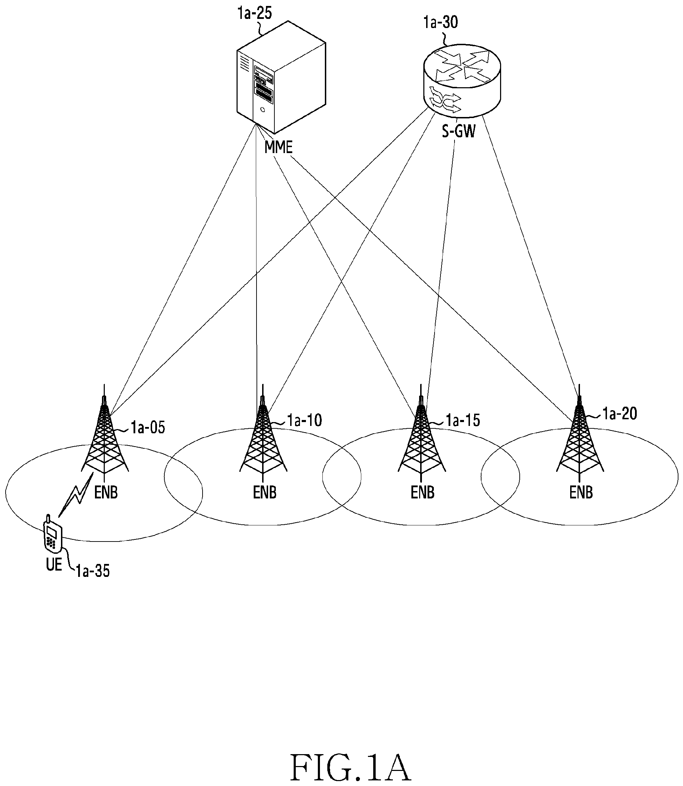

FIG. 1A illustrates a structure of an LTE system according to an embodiment of the disclosure.

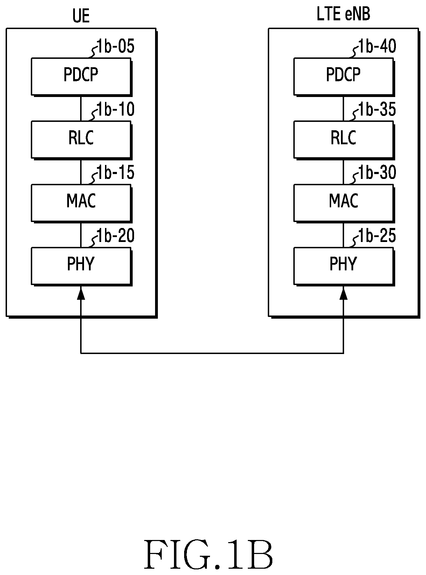

FIG. 1B illustrates a radio protocol structure in an LTE system according to an embodiment of the disclosure.

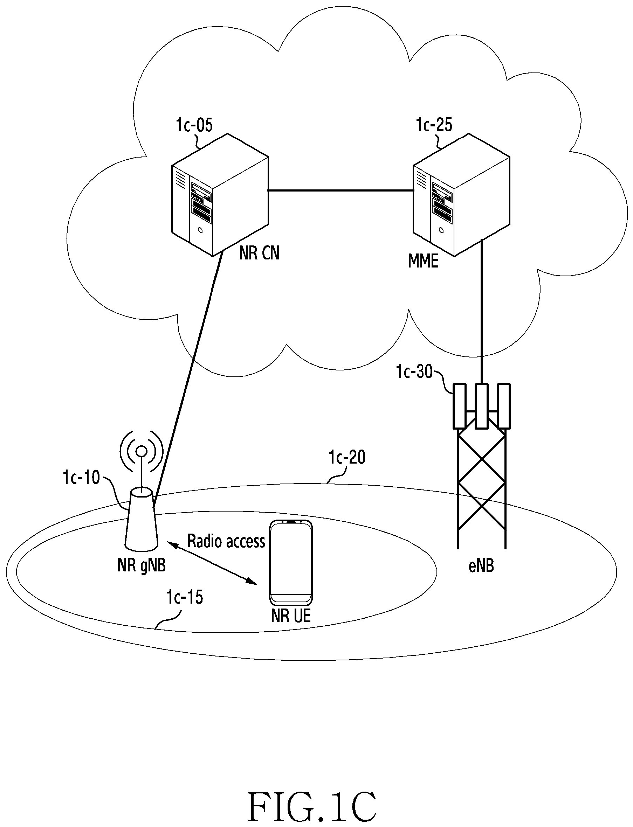

FIG. 1C illustrates a structure of a next-generation mobile communication system according to an embodiment of the disclosure.

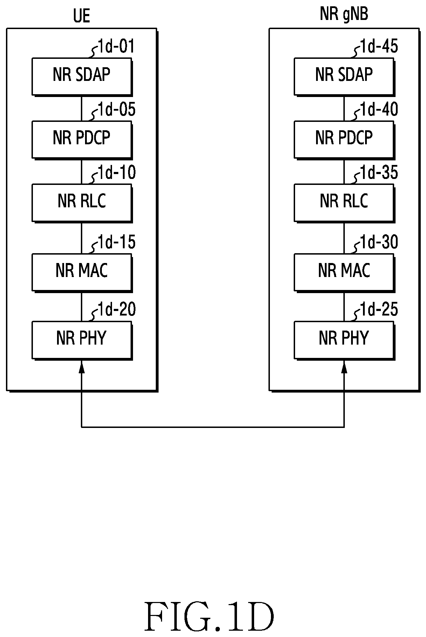

FIG. 1D illustrates a radio protocol structure of a next-generation mobile communication system according to an embodiment of the disclosure.

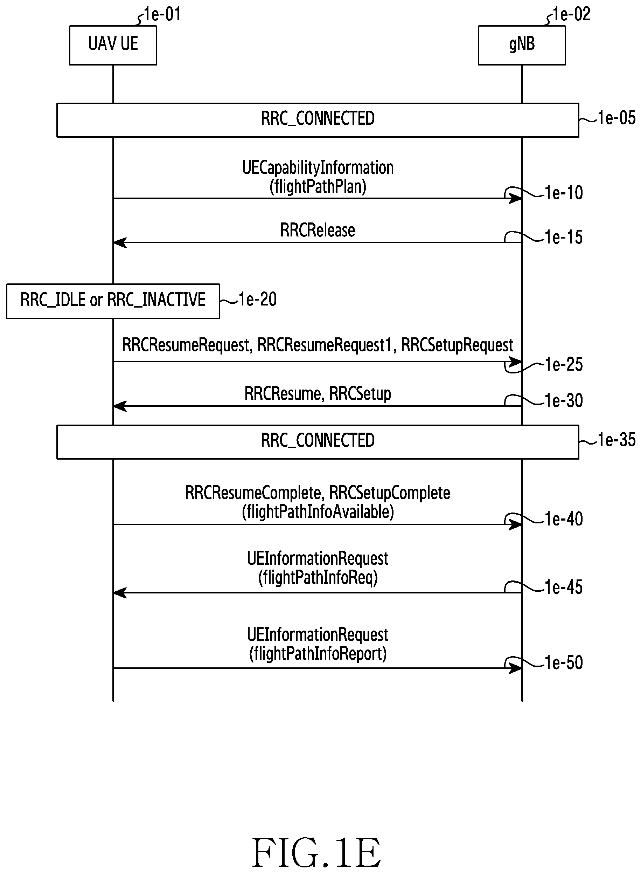

FIG. 1E illustrates a procedure in which an uncrewed aerial vehicle (UAV) UE reports flight path information to a base station in a next-generation mobile communication system according to an embodiment of the disclosure.

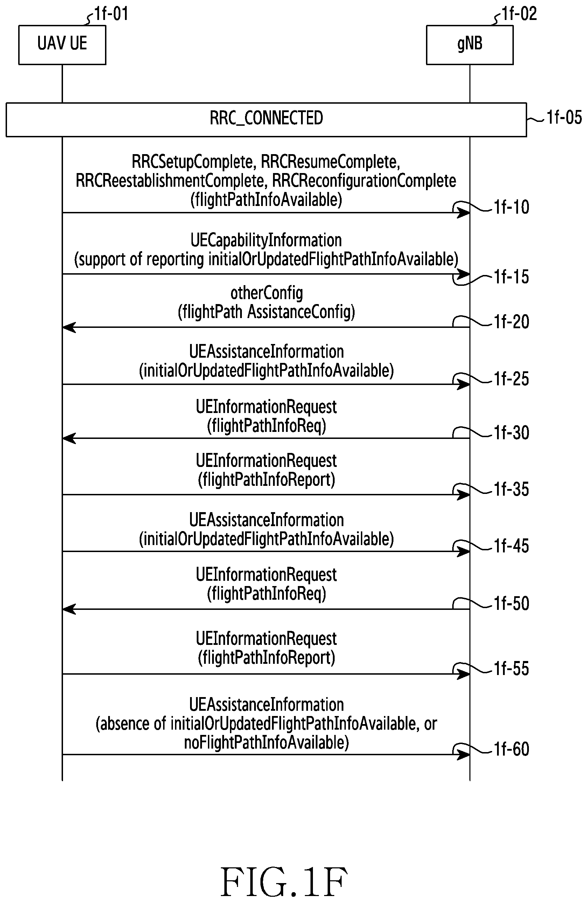

FIG. 1F illustrates a procedure in which an uncrewed aerial vehicle (UAV) UE reports, to a base station through UE assistance information (UEAssistanceInformation), that flight path information is available in a next-generation mobile communication system according to an embodiment of the disclosure.

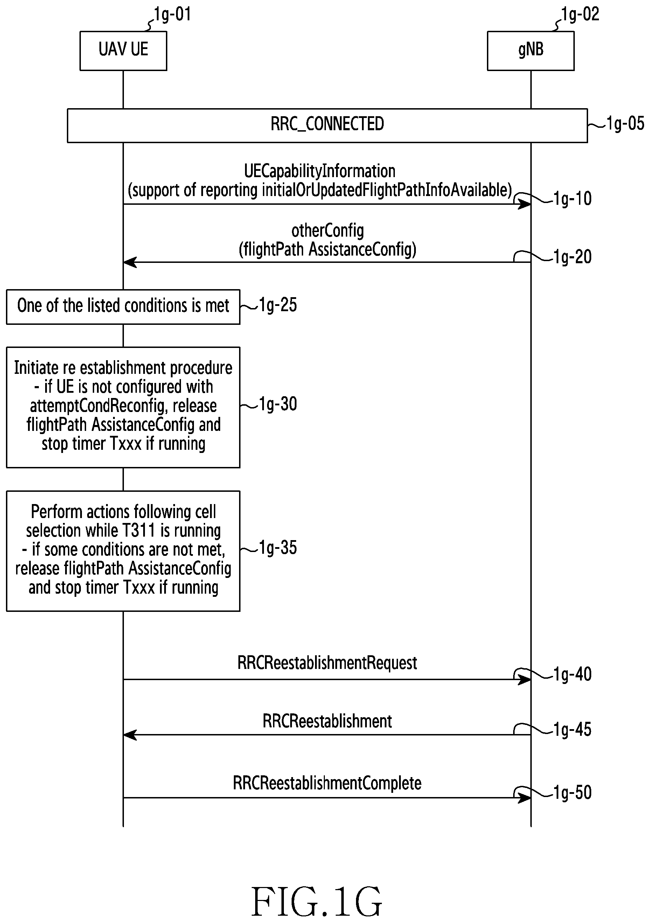

FIG. 1G illustrates a method in which an uncrewed aerial vehicle (UAV) UE manages flight information assistance configuration information (flightPath-AssistanceConfig) in a next-generation mobile communication system according to an embodiment of the disclosure.

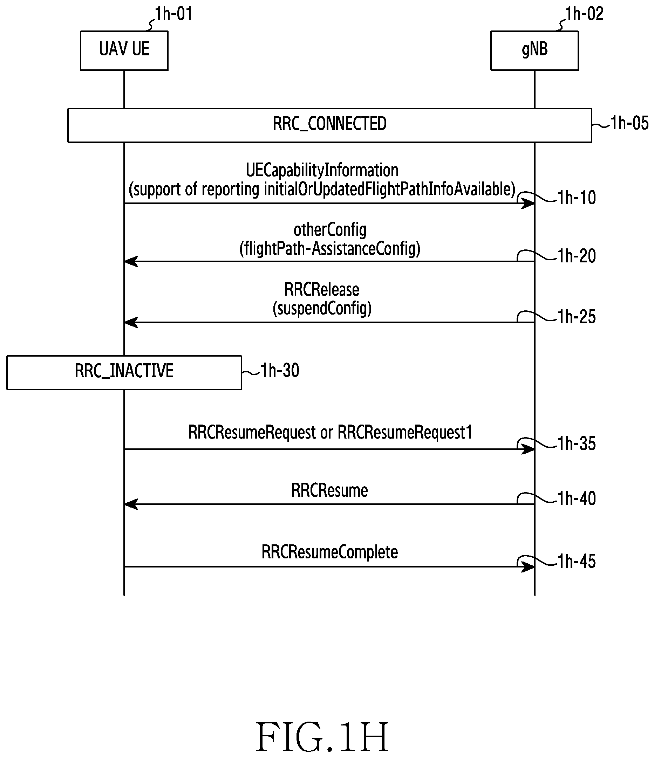

FIG. 1H illustrates a method in which an uncrewed aerial vehicle (UAV) UE manages flight information assistance configuration information (flightPath-AssistanceConfig) in a next-generation mobile communication system according to an embodiment of the disclosure.

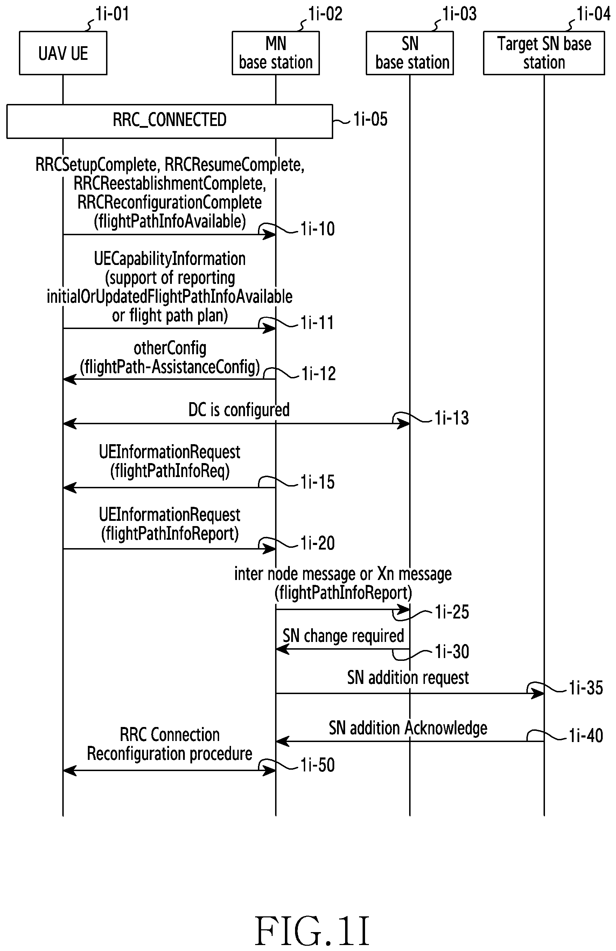

FIG. 1I illustrates a procedure of exchanging, between base stations, flight path information (FlightPathReport) transmitted by an uncrewed aerial vehicle (UAV) UE in a next-generation mobile communication system according to an embodiment of the disclosure.

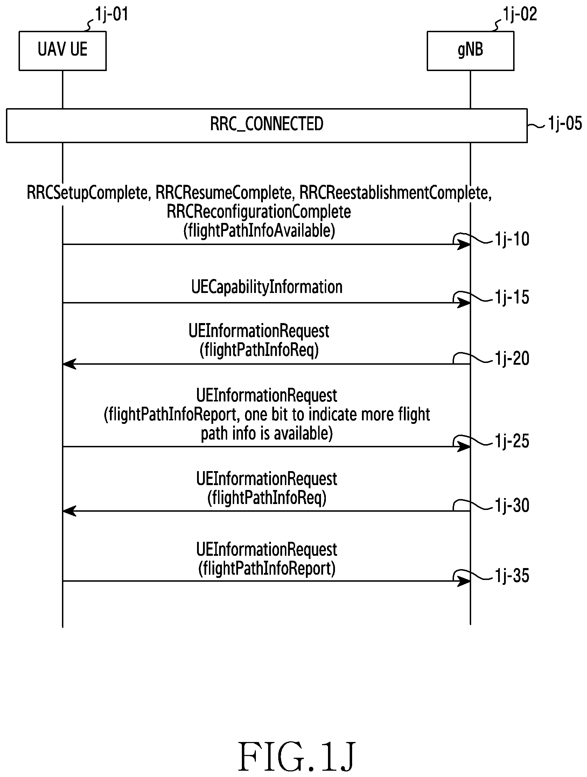

FIG. 1J illustrates a procedure in which an uncrewed aerial vehicle (UAV) UE reports flight path information to the base station in a next-generation mobile communication system according to an embodiment of the disclosure.

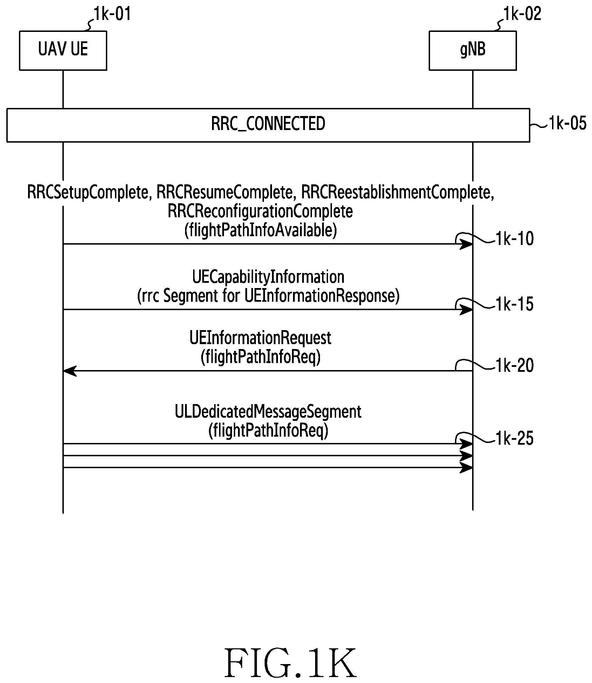

FIG. 1K illustrates a procedure in which an uncrewed aerial vehicle (UAV) UE reports flight path information to a base station in a next-generation mobile communication system according to an embodiment of the disclosure.

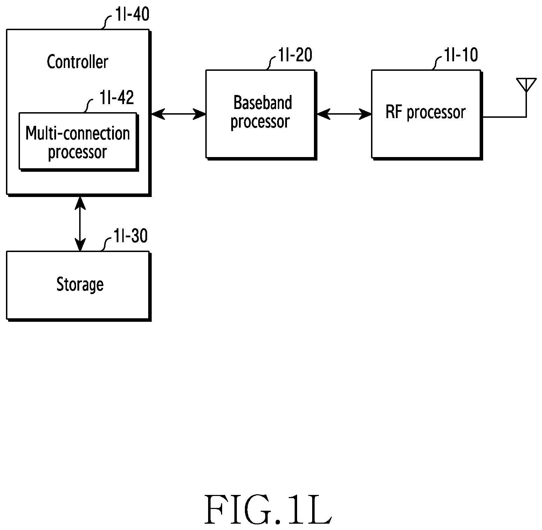

FIG. 1L is a block diagram illustrating a structure of a UE according to an embodiment of the disclosure.

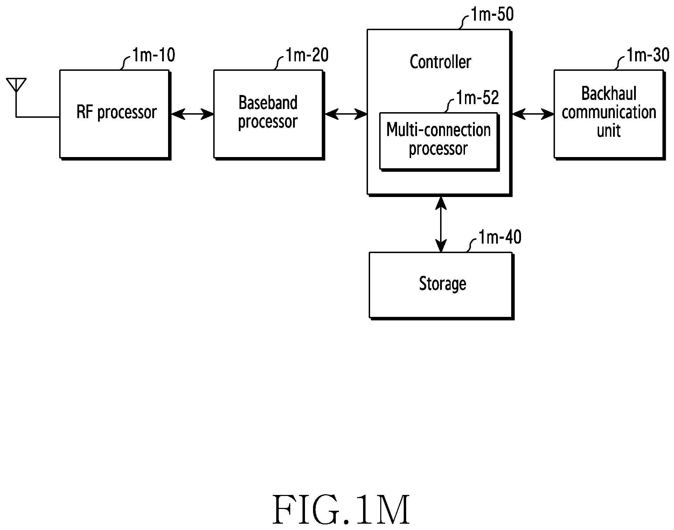

FIG. 1M is a block diagram illustrating a structure of a base station according to an embodiment of the disclosure.

### [Mode for the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors. In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, the examples given above are not limiting.

In particular, the disclosure may be applied to 3GPP NR (5th generation mobile communication standard). Furthermore, the disclosure may be applied to intelligent services (e.g., smart homes, smart buildings, smart cities, smart cars or connected cars, healthcare, digital education, retail business, security and safetyrelated services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultramobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultrareliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5ms, and may also require a packet error rate of 10⁻⁵ or less. Therefore, for the services supporting URLLC, a 5G system must provide a transmit time interval (TTI) shorter than those of other services, and may also require a design for assigning a large number of resources in a frequency band in order to secure reliability of a communication link.

The above described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

FIG. 1A illustrates a structure of an LTE system according to an embodiment of the disclosure.

Referring to FIG. 1A, as illustrated therein, a radio access network of an LTE system includes next-generation base stations (evolved node Bs, hereinafter ENBs, node Bs, or base stations) 1a-05, 1a-10, 1a-15, and 1a-20, a mobility management entity (MME) 1a-25, and a serving gateway (S-GW) 1a-30. A user equipment (hereinafter UE or terminal) 1a-35 accesses an external network through the ENBs 1a-05 to 1a-20 and the S-GW 1a-30.

In FIG. 1A, the ENBs 1a-05 to 1a-20 may correspond to conventional node Bs of a universal mobile telecommunication system (UMTS). The ENBs are connected to the UE 1a-35 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 1a-05 to 1a-20 serve as the device. In general, one ENB may control multiple cells. For example, in order to implement a transfer rate of 100 Mbps, the LTE system may use orthogonal frequency division multiplexing (hereinafter referred to as OFDM) as a radio access technology in a bandwidth of, for example, 20MHz. Obviously, the examples given above are not limiting. Furthermore, the ENBs 1a-05 to 1a-20 may employ an adaptive modulation & coding (hereinafter referred to as AMC) scheme for determining a modulation scheme and a channel coding rate according to a channel state of a UE. The S-GW 1a-30 is a device that provides a data bearer, and generates or removes a data bearer under the control of the MME 1a-25. The MME is a device responsible for various control functions as well as a mobility management function for a UE, and is connected to multiple base stations.

FIG. 1B illustrates a radio protocol structure in an LTE system according to an embodiment of the disclosure.

Referring to FIG. 1B, a radio protocol of an LTE system includes a packet data convergence protocol (PDCP) 1b-05 or 1b-40, a radio link control (RLC) 1b-10 or 1b-35, and a medium access control (MAC) 1b-15 or 1b-30 on each of UE and ENB sides. The packet data convergence protocol (PDCP) 1b-05 or 1b-40 is responsible for operations such as IP header compression/reconstruction. The main functions of the PDCP are summarized as follows. Obviously, the examples given below are not limiting.
- Header compression and decompression: robust header compression (ROHC) only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (hereinafter referred to as RLC) 1b-10 or 1b-35 may reconfigure a PDCP protocol data unit (PDU) into an appropriate size to perform an ARQ operation. The main functions of the RLC are summarized as follows. Obviously, the examples given below are not limiting.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 1b-15 or 1b-30 may be connected to several RLC layer devices configured in a single terminal, and multiplex RLC PDUs into a MAC PDU and demultiplex a MAC PDU into RLC PDUs. The main functions of the MAC are summarized as follows. Obviously, the examples given below are not limiting.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical layer 1b-20 or 1b-25 performs operations of channel-coding and modulating upper layer data, thereby obtaining OFDM symbols, and delivering the same through a radio channel, or demodulating OFDM symbols received through the radio channel, channel-decoding the same, and delivering the same to the upper layer. Obviously, the examples given above are not limiting.

FIG. 1C illustrates a structure of a next-generation mobile communication system according to an embodiment of the disclosure.

Referring to FIG. 1C, a radio access network of a wireless communication system (hereinafter next-generation mobile communication system, NR, or 5G) may include a new radio node B (hereinafter NR gNB or NR base station) 1c-10, and a new radio core network (NR CN) 1c-05. A user terminal (new radio user equipment, hereinafter NR UE or NR terminal) 1c-15 may access an external network via the NR gNB 1c-10 and the NR CN 1c-05.

In FIG. 1c, the NR gNB 1c-10 may correspond to an evolved node B (eNB) of a conventional LTE system. The NR gNB is connected to the NR UE 1c-15 through a radio channel, and can provide outstanding services as compared to a conventional node Bs. In the next-generation mobile communication system, since all user traffic is serviced through a shared channel, a device that collects state information, such as buffer statuses, available transmit power states, and channel states of UEs, and performs scheduling accordingly is required, and the NR gNB 1c-10 may serve as the device. In general, one NR gNB may control multiple cells.

According to an embodiment of the disclosure, in order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, according to an embodiment of the disclosure, the NR gNB 1c-10 may employ an adaptive modulation & coding (hereinafter referred to as AMC) scheme for determining a modulation scheme and a channel coding rate according to a channel state of a UE. The NR CN 1c-05 may perform functions such as mobility support, bearer configuration, and QoS configuration. The NR CN 1c-05 is a device responsible for various control functions as well as a mobility management function for a UE, and may be connected to multiple base stations. In addition, the next-generation mobile communication system may interwork with the existing LTE system, and the NR CN 3-05 may be connected to an MME 1c-25 via a network interface. The MME may be connected to an eNB 1c-30 that is an existing base station.

FIG. 1D illustrates a radio protocol structure of a next-generation mobile communication system according to an embodiment of the disclosure.

Referring to FIG. 1D, a radio protocol of a next-generation mobile communication system may include an NR service data adaptation protocol (SDAP) 1b-01 or 1b-45, an NR packet data convergence protocol (PDCP) 1b-05 or 1b-40, an NR radio link control (RLC) 1b-10 or 1b-35, and an NR medium access controls (MAC) 1b-15 or 1b-30 on each of UE and NR base station sides.

According to an embodiment of the disclosure, the main functions of the NR SDAP 1d-01 or 1d-45 may include some of functions below. Obviously, the examples given below are not limiting.
- Transfer of user plane data
- Mapping between a QoS flow and a DRB for both DL and UL
- Marking QoS flow ID in both DL and UL packets
- Reflective QoS flow to DRB mapping for UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

According to an embodiment of the disclosure, the main functions of the NR PDCP 1d-05 or 1d-40 may include some of functions below. Obviously, the examples given below are not limiting.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment of the disclosure, the reordering of the NR PDCP device may refer to a function of reordering PDCP PDU received from a lower layer in an order based on PDCP sequence numbers (SNs). The reordering of the NR PDCP device may include at least one of a function of transferring data to an upper layer according to a rearranged order, a function of directly transferring data without considering order, a function of rearranging order to record lost PDCP PDUs, a function of reporting the state of lost PDCP PDUs to a transmission side, and a function of requesting retransmission of lost PDCP PDUs.

According to an embodiment of the disclosure, the main functions of the NR RLC 1d-10 or 1d-35 may include some of functions below. Obviously, the examples given below are not limiting.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery of the NR RLC device may refer to a function of, if there is a lost RLC PDU, delivering only RLC SDUs before the lost RLC PDU to the upper layer in sequence. The in-sequence delivery may include at least one of a function of, if one original RLC SDU is divided into several RLC SDUs and then the RLC SDUs are received, reassembling the several RLC SDUs and transferring the reassembled RLC SDUs, a function of rearranging received RLC PDUs with reference to RLC sequence numbers (SNs) or PDCP sequence numbers (SNs), a function of rearranging order to record lost RLC PDUs, a function of reporting the state of lost RLC PDUs to a transmission side, a function of requesting retransmission of lost RLC PDUs, a function of, if there is a lost RLC SDU, sequentially transferring only RLCSDUs before the lost RLC SDU to an upper layer, a function of, although there is a lost RLC SDU, if a predetermined timer has expired, sequentially transferring, to an upper layer, all the RLC SDUs received before the timer is started, and a function of, although there is a lost RLC SDU, if a predetermined timer has expired, sequentially transferring all the RLC SDUs received up to the current, to an upper layer.

In addition, according to an embodiment of the disclosure, .the NR RLC 1d-1- or 1d-35 may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC 1d-10 or 1d-35 may include no concatenation function, which may be performed in the NR MAC layer or replaced with a multiplexing function of the NR MAC layer. Obviously, the examples given above are not limiting.

The out-of-sequence delivery of the NR RLC device 1d-10 or 1d-35 may include a function of directly delivering RLC SDUs received from a lower layer to an upper layer regardless of the order, and may include at least one of a function of reassembling and delivering multiple RLC SDUs received, into which one original RLC SDU has been segmented, and a function of storing and reordering the RLC SNs or PDCP SNs of received RLC PDUs and recording lost RLC PDUs.

According to an embodiment of the disclosure, the NR MAC 1d-15 or 1d-30 may be connected to multiple NR RLC layer devices configured in one UE, and the main functions of the NR MAC may include at least some of functions below. Obviously, the examples given below are not limiting.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment of the disclosure, an NR PHY layer 1d-20 or 1d-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. Obviously, the examples given above are not limiting.

FIG. 1E illustrates a procedure in which an uncrewed aerial vehicle (UAV) UE reports flight path information to a base station in a next-generation mobile communication system according to an embodiment of the disclosure.

Referring to FIG. 1E, a UE 1e-01 may configure an RRC connection with a base station 1e-02 and may be in an RRC-connected mode (RRC_CONNECTED) (operation 1e-05).

In operation 1e-10, the UE 1e-01 in the RRC-connected mode may transmit a UE capability information message to the base station 1e-02. The UE capability information message may include an indicator (or indication information) indicating that flight path information can be reported.

In operation 1e-15, the base station 1e-02 may transmit an RRC connection release message (RRCRelease) to the UE 1e-01 in the RRC-connected mode. The RRC connection release message may include suspension configuration information (suspendConfig). That is, when the suspension configuration information is included in the RRC connection release message, the UE 1e-01 may transition (operation 1e-20) to an RRC inactive mode (RRC_INACTIVE). On the other hand, when the suspension configuration information is not included in the RRC connection release message, the UE 1e-01 may transition (operation 1e-20) to an RRC idle mode (RRC IDLE).

In operation 1e-20, the UE 1e-01 having transitioned to the RRC inactive mode may perform an RRC connection resumption procedure with the base station 1e-02. Specifically, the UE 1e-01 may transmit (operation 1e-25) an RRC resumption request message (RRCResumeRequest or RRCResumeRequest1) to the base station 1e-02. The base station 1e-02 having received the RRC resumption request message may transmit (operation 1e-30) an RRC resumption message (RRCResume) to the UE 1e-01. The UE 1e-01 having received the RRC resumption message may transition (operation 1e-35) to the RRC-connected mode. The UE 1e-01 having transitioned to the RRC-connected mode may transmit (operation 1e-40) an RRC resumption completion message (RRCResumeComplete) to the base station 1e-02. If the UE 1e-01 has flight path information (if the UE has flight path information available), the UE 1e-01 may include an indicator (flightPathInfoAvailable) indicating that the flight path information is included in the RRC resumption completion message.

In operation 1e-20, the UE 1e-01 having transitioned to the RRC idle mode may perform an RRC connection setup procedure with the base station 1e-02. Specifically, the UE 1e-01 may transmit (operation 1e-25) an RRC setup request message (RRCSetupRequest) to the base station 1e-02. The base station 1e-02 having received the RRC setup request message may transmit (operation 1e-30) the RRC setup message (RRCSetup) to the UE 1e-01. The UE 1e-01 having received the RRC setup message may transition (operation 1e-35) to the RRC-connected mode. The UE 1e-01 having transitioned to the RRC-connected mode may transmit (operation 1e-40) an RRC setup completion message (RRCSetupComplete) to the base station 1e-02. If the UE 1e-01 has flight path information (if the UE has flight path information available), the UE 1e-01 may include an indicator (flightPathInfoAvailable) indicating that the flight path information is included in the RRC setup completion message.

In operation 1e-45, the base station 1e-02 may transmit a UE information request message (UEInformationRequest) to the UE 1e-01. The flightPathInfoReq information may be included in the UE information request message. At least one of the following pieces of information may be included in the flightPathInfoReq information. However, the disclosure is not limited to the example above.
- includeTimeStamp: indicates whether time stamp of each waypoint can be reported in the flight path information report if time stamp information is available at the UE.
- maxWayPointNumber: indicates the maximum number of way points UE can include in the flight path information report if this information is available at the UE.

In operation 1e-50, if the flightPathInfoReq information is included in the UE information request message received in operation 1e-45 and the UE 1e-01 has flight path information (if the UE has flight path information available), the UE 1e-01 may transmit a UE information response message (UEInformationResponse) including flightPathInfoReport to the base station 1e-02. The UE information response message may include one or multiple WayPointLocations. If the includeTimeStamp is set to TRUE, the UE 1e-01 may include information on the time when the UE intends to arrive for each waypoint in the UE information response message (If the includeTimeStamp is set to TRUE, the UE sets the field timeStamp to the time when UE intends to arrive to each waypoint if this information is available at the UE).

For reference, according to an embodiment of the disclosure, if the UE 1e-01 has flight path information (if the UE has flight path information available), the UE may include an indicator (flightPathInfoAvailable) indicating that flight path information is included in an RRC connection reestablishment completion message (RRCReestablishmentComplete) or an RRC connection reconfiguration completion message (RRCReconfigurationComplete) and transmit the same to the base station 1e-02. Accordingly, the base station 1e-02 may retrieve flight path information (FlightPathInfoReport) from the UE 1e-01 through operations 1e-45 and 1e-50.

FIG. 1F illustrates a procedure in which an uncrewed aerial vehicle (UAV) UE reports, to a base station through UE assistance information (UEAssistanceInformation), that flight path information is available in a next-generation mobile communication system according to an embodiment of the disclosure.

For reference, various scenarios below can be supported through the UAV UE.
- Accident and crime scene investigation
- Aerial photography
- Agriculture inspection
- Construction inspection
- Crowd control
- Drug and gas detection
- Entertainment and movies
- Flash flood warning
- Fire spotting
- Intelligence gathering
- Mapping and surveying
- Network tower inspection
- Newsgathering
- Pilot augmentation
- Pipeline/railroad inspection
- Power distribution tower inspection
- Search and rescue
- Security
- Small package delivery
- Traffic monitoring
- Wildlife and environment monitoring, etc.

In the above-described scenario, the UAV UE may move along a determined flight path (e.g., small package deliver) for a predetermined time interval, or may move along a variable flight path according to a situation for a predetermined time interval. (e.g., accident and crime scene investigation). That is, a predetermined flight path may be changed according to a situation as the UE starts flying from a predetermined time point. In the disclosure, a UE supporting the above-described scenario is called a UAV UE.

Referring to FIG. 1F, the UE 1f-01 may configure an RRC connection with a base station 1f-02 and may be in an RRC-connected mode (RRC_CONNECTED) (operation 1f-05).

In operation 1f-10, if the UE 1f-01 has flight path information (if the UE has flight path information available), the UE 1f-01 may transmit, to the base station 1f-02 through at least one of the following RRC messages, an indicator (flightPathInfoAvailable) indicating that flight path information is available.
- RRC Setup completion message (RRCSetupComplete)
- RRC resumption completion message (RRCResumeComplete)
- RRC reestablishment completion message (RRCReestablishmentComplete)
- RRC reconfiguration completion message (RRCReconfigurationComplete)

In operation 1f-15, the UE 1f-01 in an RRC-connected mode may transmit a UE capability information message (UECapabilityInformation) to the base station 1f-01. The UE capability information message may include information indicating a capability that the UE 1f-01 can inform the base station 1f-02 of an indicator (initialOrUpdatedFlightPathInfoAvailable) indicating that initial flight path information or updated flight path information is available through a UE assistance information message (UEAssitanceInformation). Additionally, the UE capability information message may include information indicating that the UE 1f-01 can inform the base station of an indicator (noFlightPathInfoAvailable) indicating that flight path information is no longer available through a UE assistance information message. For reference, the UE 1f-01 may inform the base station of the above-described initial flight path information, updated flight path information, indicator indicating that no flight path is available, and the like as one piece of capability information. In addition, according to an embodiment, the description made in operation 1f-01 may correspond to operation 1e-01 in the above-described embodiment. In addition, according to an embodiment, operation 1f-15 may be performed before operation 1f-10.

In operation 1f-20, the base station 1f-02 may configure otherConfig through a predetermined RRC message to the UE 1f-01. For example, the predetermined RRC message may mean an RRC connection reconfiguration message (RRCReconfiguration) or an RRC resumption message (RRCResume). The otherConfig may include flight information assistance configuration information (flightPath-AssistanceConfig). The flight information assistance configuration information may include at least one of the following pieces of information. However, the disclosure is not limited to the example below.
- flightPath-AssistanceProhibitTimer: may be configured as one timer value among one or more values.
- WayPointDiff: may be configured as one distance difference value among one or more values. For example, the base station may configure, for the UE, WayPointDiff as a value indicating a predetermined distance difference from each waypoint transmitted through a UE information response message (UEInformationResponse).
- TimeStampDiff: may be configured as one time difference value among one or more values. For example, the base station may configure, for the UE, TimeStampDiff as a value indicating a predetermined time difference from a timestamp associated with each way point transmitted through a UE information response message (UEInformationResponse).
- 1-bit indicator: An indicator indicating whether the UE can transmit, to the base station through a UE assistance information message (UEAssistanceInformation), an indicator indicating that initial flight path information or updated flight path information is available

In operation 1f-25, the UE 1f-01 may transmit a UE assistance information message (UEAssitanceInformation) to the base station 1f-02. The UE assistance information message may include an indicator or an information element indicating that (updated) flight path information is available. The UE 1f-01 may transmit the UE assistance information message to the base station 1f-02 only when at least one of the following conditions is satisfied. However, the disclosure is not limited to the example below.
- Condition 1: is a case where the UE 1f-01 has not transmitted flightPathInfoAvailable to the base station 1f-02 through operation 1f-10 and the UE 1f-01 has flight path information or updated flight path information (if the UE has flight path information available or if the UE has updated flight path information available).
- Condition 2: is a case where the UE 1f-01 has flight path information or updated flight path information but does not transmit the flight path information to the base station 1f-02.
- Condition 3: is a case where the UE 1f-01 has transmitted flightPathInfoAvailable through operation 1f-10 but the flight path information to be transmitted is updated thereafter (in this case, not updated flight path information and updated flight path information have not been transmitted to the base station 1f-02).

The UE 1f-01 may activate or reactivate a timer value with a value configured by flightPath-AssistanceProhibitTimer. When the timer value has expired but actual flight path information has not been transmitted to the base station 1f-02, the UE 1f-01 may not additionally retransmit a UE assistance information message to the base station 1f-02. That is, the UE 1f-01 may not retransmit the UE assistance information message to prevent the same message from being unnecessarily retransmitted to the base station 1f-02.

The flight path information can be generated after operation 1f-10, and thus a situation in which the UE 1f-01 cannot transmit flightPathInfoAvailable to the base station 1f-02 in operation 1f-10. Accordingly, the UE 1f-01 may inform, through operation 1f-25, the base station 1f-02 of information indicating that flight path information is available so that the base station may retrieve the flight path information later from the UE 1f-01 if necessary.

In operation 1f-30, the base station 1f-02 may transmit a UE information request message (UEInformationRequest) to the UE 1f-01. The UE information request message may include flightPathInfoReq information. The fligthPathInfoReq information may include at least one of the following pieces of information. However, the disclosure is not limited to the example below.
- includeTimeStamp: indicates whether time stamp of each way point can be reported in the flight path information report if time stamp information is available at the UE.
- maxWayPointNumber: indicates the maximum number of way points UE can include in the flight path information report if this information is available at the UE.

In operation 1f-35, if the UE information request message received in operation 1f-30 includes flightPathInfoReq information and the UE 1f-01 has (updated) flight path information (if UE has (updated) flight path information available), the UE 1f-01 may transmit a UE information response message (UEInformationResponse) including flightPathInfoReport to the base station 1f-02. The flightPathInfoReport may include one or more WayPointLocations. If includeTimeStamp is set to TRUE, the UE 1f-01 may include, in a UE information response message, information on the time when the UE intends to arrive for each waypoint in the UE information response message (if the includeTimeStamp is set to TRUE, the UE sets the field timeStamp to the time when UE intends to arrive to each waypoint if this information is available at the UE).

In operation 1f-40, if at least one of the following conditions is satisfied, the UE 1f-01 may transmit, to the base station 1f-02, a UE assistance information message (UEAssistanceInformation) including an indicator or an information element indicating that (updated) flight path information is available. However, the disclosure is not limited to the example below.
- Condition 3: is a case where at least one is updated from the flightPathReport transmitted through operation 1f-35.
- Condition 4: is a case where condition 3 is satisfied and a timer activated or reactivated with a value configured by the flightPath-AssistanceProhibitTimer expires.
- Condition 5: is a case where at least one WayPoint has a difference equal to or greater than WayPointDiff in the flightPathReport transmitted through operation 1f-35. In this case, when the difference is compared, the flightPathReport transmitted through operation 1f-30 is compared with a flight path along which the UE 1f-01 actually moves or a flight path along which the UE is expected to move.
- Condition 6: is a case where condition 5 is satisfied and a timer activated or reactivated with a value configured by flightPath-AssistanceProhibitTimer expires.
- Condition 7: is a case where at least one timestamp has a difference equal to or greater than TimeStampDiff in the flightPathReport transmitted through operation 1f-35. In this case, when the difference is compared, the flightPathReport transmitted through operation 1f-30 is compared with a time point at which the UE actually arrives at a flight path or a time point at which the UE is expected to arrive.
- Condition 8: is a case where condition 7 is satisfied and a timer activated or reactivated with a value configured by the flightPath-AssistanceProhibitTimer expires.
- Condition 9: is a case where both condition 5 and condition 7 is satisfied.
- Condition 10: is a case where condition 9 is satisfied and a timer activated or reactivated with a value configured by the flightPath-AssistanceProhibitTimer expires.

In operation 1f-50, the base station 1f-02 may transmit a UE information request message (UEInformationRequest) to the UE 1f-01. The UE information request message may include flightPathInfoReq information. This may correspond to the description made in operation 1f-30.

In operation 1f-55, if the UE information request message received in operation 1f-50 includes flightPathInfoReq information and the UE 1f-01 has (updated) flight path information (if the UE has (updated) flight path information available), the UE 1f-01 may transmit a UE information response message (UEInformationResponse) including flightPathInfoReport to the base station 1f-02.

In operation 1f-60, the UE 1f-01 may transmit a UE assistance information message to the base station 1f-02. The UE assistance information message includes a field including an indicator or an information element indicating that (updated) flight path information is available, but may not include the indicator or the information element included in the field, or may include an indicator indicating that flight path information is no longer available. The UE 1f-01 may transmit the UE assistance information message to the base station 1f-02 only when at least one of the following conditions is satisfied.
- Condition 10: is a case where the flight path transmitted in operation 1f-35 or 1f-55 has ended and flight path information is no longer available.
- Condition 11: is a case where condition 10 is satisfied and timer activated or reactivated with a value configured by flightPath-AssistanceProhibitTimer expires.
- Condition 12: is a case where the flight path has been transmitted in operation 1f-35 or 1f-55, but flight path information is no longer available (if the UE no longer has flight information available)
- Condition 13: is a case where condition 12 is satisfied and a timer activated or reactivated with a value configured by flightPath-AssistanceProhibitTimer expires.
- Condition 14: is a case where flightPathInfoAvailable is transmitted through operation 1f-10 but the UE has no flight path information at a current time point (this is also applicable to operation 1f-25).

For reference, the reason that the UE 1f-01 provides flight path information to the base station 1f-02 is for allowing the base station 1f-02 to efficiently use a resource according to the flight path of the UE 1f-01 according to the flight path information. That is, the base station can provide a seamless service to the UE 1f-01 by selecting a target cell for handover according to a given time slot and securing resources to use in advance. Accordingly, the UE 1f-01 reports expected flight path information to the base station 1f-02 to derive a win-win effect for both the UE 1f-01 and the base station 1f-02. In addition, as in operation 1f-60, if the UE 1f-01 informs the base station 1f-02 that flight path information is no longer available, there is an additional expected effect that the base station 1f-02 can efficiently use an available resource for another UE.

FIG. 1G illustrates a method in which an uncrewed aerial vehicle (UAV) UE manages flight information assistance configuration information (flightPath-AssistanceConfig) in a next-generation mobile communication system according to an embodiment of the disclosure.

Referring to FIG. 1G, a UE 1g-01 may configure an RRC connection with a bae station 1g-02 and may be in an RRC-connected mode (RRC_CONNCECTED) (operation 1g-05).

In operation 1g-10, the UE 1g-01 in the RRC-connected mode may transmit, to the base station 1g-02, a UE capability information message (UECapabilityInformation) including an indicator indicating a capability of reporting or updating flight path information. This may correspond to operation 1f-15 in the above-described embodiment.

In operation 1g-20, the base station 1g-02 may configure otherConfig to the UE 1g-01 through a predetermined RRC message. For example, the predetermined RRC message may mean an RRC connection reconfiguration message (RRCReconfiguration) or an RRC resumption message (RRCResume). The otherConfig may include flight information assistance configuration information (flightPath-AssistanceConfig). This may correspond to operation 1f-20 in the above-described embodiment.

In operation 1g-25, the UE 1g-01 may determine that at least one of the following conditions is satisfied. For reference, the following conditions are described in detail in Chapter 5.3.7.2 of the 3GPP TS 38.331 specification.
1> upon detecting radio link failure of the MCG and t316 is not configured, in accordance with 5.3.10; or
1> upon detecting radio link failure of the MCG while SCG transmission is suspended, in accordance with 5.3.10; or
1> upon detecting radio link failure of the MCG while PSCell change or PSCell addition is ongoing, in accordance with 5.3.10; or
1> upon detecting radio link failure of the MCG while the SCG is deactivated, in accordance with 5.3.10; or
1> upon re-configuration with sync failure of the MCG, in accordance with clause 5.3.5.8.3; or
1> upon mobility from NR failure, in accordance with clause 5.4.3.5; or
1> upon integrity check failure indication from lower layers concerning SRB1 or SRB2, except if the integrity check failure is detected on the RRCReestablishment message; or
1> upon an RRC connection reconfiguration failure, in accordance with clause 5.3.5.8.2; or
1> upon detecting radio link failure for the SCG while MCG transmission is suspended, in accordance with clause 5.3.10.3 in NR-DC or in accordance with TS 36.331 [10] clause 5.3.11.3 in NE-DC; or
1> upon reconfiguration with sync failure of the SCG while MCG transmission is suspended in accordance with clause 5.3.5.8.3; or
1> upon SCG change failure while MCG transmission is suspended in accordance with TS 36.331 [10] clause 5.3.5.7a; or
1> upon SCG configuration failure while MCG transmission is suspended in accordance with clause 5.3.5.8.2 in NR-DC or in accordance with TS 36.331 [10] clause 5.3.5.5 in NE-DC; or
1> upon integrity check failure indication from SCG lower layers concerning SRB3 while MCG is suspended; or
1> upon T316 expiry, in accordance with clause 5.7.3b.5; or
1> upon detecting sidelink radio link failure by L2 U2N Remote UE in RRC_CONNECTED, in accordance with clause 5.8.9.3; or
1> upon reception of *NotificationMessageSidelink* including *indicationType* by L2 U2N Remote UE in RRC _CONNECTED, in accordance with clause 5.8.9.10; or
1> upon PC5 unicast link release indicated by upper layer at L2 U2N Remote UE in RRC_CONNECTED.

In operation 1g-30, the UE 1g-01 may initiate an RRC connection reestablishment procedure. That is, the UE 1g-01 may perform the following procedure (Chapter 5.3.7.2 of the 3GPP TS 38.331 specification).

Upon initiation of the procedure, the UE shall:
1> stop timer T310, if running;
1> stop timer T312, if running;
1> stop timer T304, if running;
1> start timer T311;
1> stop timer T316, if running;
1> if UE is not configured with *attemptCondReconfig:*
   2> reset MAC;
   2> release *spCellConfig,* if configured;
   2> suspend all RBs, and BH RLC channels for IAB-MT, and Uu Relay RLC channels for L2 U2N Relay UE, except SRB0 and broadcast MRBs;
   2> release the MCG SCell(s), if configured;
   2> if MR-DC is configured:
      3> perform MR-DC release, as specified in clause 5.3.5.10;
   2> release *delayBudgetReportingConfig,* if configured and stop timer T342, if running;
   2> release *overheatingAssistanceConfig,* if configured and stop timer T345, if running;
   2> release *idc-AssistanceConfig,* if configured;
   2> release *btNameList,* if configured;
   2> release *wlanNameList,* if configured;
   2> release *sensorNameList,* if configured;
   2> release *drx-PreferenceConfig* for the MCG, if configured and stop timer T346a associated with the MCG, if running;
   2> release *maxBW-PreferenceConfig* for the MCG, if configured and stop timer T346b associated with the MCG, if running;
   2> release *maxCC-PreferenceConfig* for the MCG, if configured and stop timer T346c associated with the MCG, if running;
   2> release *maxMIMO-LayerPreferenceConfig* for the MCG, if configured and stop timer T346d associated with the MCG, if running;
   2> release *minSchedulingOffsetPreferenceConfig* for the MCG, if configured stop timer T346e associated with the MCG, if running;
   2> release *rlm-RelaxationReportingConfig* for the MCG, if configured and stop timer T346j associated with the MCG, if running;
   2> release *bfd-RelaxationReportingConfig* for the MCG, if configured and stop timer T346k associated with the MCG, if running;
   2> release *releasePreferenceConfig,* if configured stop timer T346f, if running;
   2> release *onDemandSIB-Request* if configured, and stop timer T350, if running;
   2> release *referenceTimePreferenceReporting,* if configured;
   2> release *sl-AssistanceConfigNR,* if configured;
   2> release *obtainCommonLocation,* if configured;
   2> release *musim-GapAssistanceConfig,* if configured and stop timer T346h, if running;
   2> release *musim-LeaveAssistanceConfig,* if configured;
   2> release *ul-GapFR2-PreferenceConfig,* if configured;
   2> release *scg-DeactivationPreferenceConfig,* if configured, and stop timer T346i, if running;
   2> release *propDelayDiffReportConfig,* if configured;
   2> release *rrm-MeasRelaxationReportingConfig,* if configured;
   2> release *maxBW-PreferenceConfigFR2-2,* if configured;
   2> release *maxMIMO-LayerPreferenceConfigFR2-2,* if configured;
   2> release *minSchedulingOffsetPreferenceConfigExt,* if configured;
1> release *successHO-Config,* if configured;
1> if any DAPS bearer is configured:
   2> reset the source MAC and release the source MAC configuration;
   2> for each DAPS bearer:
      3> release the RLC entity or entities as specified in TS 38.322 [4], clause 5.1.3, and the associated logical channel for the source SpCell;
      3> reconfigure the PDCP entity to release DAPS as specified in TS 38.323 [5];
   2> for each SRB:
      3> release the PDCP entity for the source SpCell;
      3> release the RLC entity as specified in TS 38.322 [4], clause 5.1.3, and the associated logical channel for the source SpCell;
   2> release the physical channel configuration for the source SpCell;
   2> discard the keys used in the source SpCell (the K_{gNB} key, the K_{RRCenc} key, the K_{RRCint} key, the K_{UPint} key and the K_{UPenc} key), if any;
1> release *sl-L2RelayUE-Config,* if configured;
1> release *sl-L2RemoteUE-Config,* if configured;
1> release the SRAP entity, if configured;
1> if the UE is acting as L2 U2N Remote UE:
   2> if the PC5-RRC connection with the U2N Relay UE is determined to be released:
      3> indicate upper layers to trigger PC5 unicast link release;
      3> perform either cell selection in accordance with the cell selection process as specified in TS 38.304 [20], or relay selection as specified in clause 5.8.15.3, or both;
   2> else (i.e., maintain the PC5 RRC connection):
      3> consider the connected L2 U2N Relay UE as suitable and perform actions as specified in clause 5.3.7.3a;
   NOTE 1: It is up to Remote UE implementation whether to release or keep the current PC5 unicast link.
1> else:
   2> perform cell selection in accordance with the cell selection process as specified in TS 38.304 [20].
   NOTE 2: For L2 U2N Remote UE, if both a suitable cell and a suitable relay is available, the UE can select either one based on its implementation

The disclosure proposes releasing flight information assistance configuration information (flightPath-AssistanceConfig) configured in operation 1g-20 when an RRC configuration re-establishment procedure is initiated by the UE 1g-01. In addition, the disclosure proposes, if the UE is running timer Txxx with a value of flightPath-AssistanceProhibitTimer configured by the flight information assistance configuration information (flightPath-AssistanceConfig), stopping the timer. For example, the proposed operation may be performed according to the following procedure.
1> if UE is not configured with *attemptCondReconfig:*
...
2> release *flightPath-AssistanceConfig,* if configured and stop timer Txxx, if running;

In operation 1g-35, the UE 1g-01 may select an NR suitable cell while T311 timer is running and then perform the following procedure.

Upon selecting a suitable NR cell, the UE shall:
1> ensure having valid and up to date essential system information as specified in clause 5.2.2.2;
1> stop timer T311;
1> if T390 is running:
   2> stop timer T390 for all access categories;
   2> perform the actions as specified in 5.3.14.4;
1> stop the relay (re)selection procedure, if ongoing;
1> if the cell selection is triggered by detecting radio link failure of the MCG or re-configuration with sync failure of the MCG or mobility from NR failure, and
1> if *attemptCondReconfig* is configured; and
1> if the selected cell is not configured with *CondEventT1,* or the selected cell is configured with *CondEventT1* and leaving condition has not been fulfilled; and
1> if the selected cell is one of the candidate cells for which the *reconfigurationWithSync* is included in the *masterCellGroup* in the MCG *VarConditionalReconfig*:
   2> if the UE supports RLF-Report for conditional handover, set the *choCellId* in the *VarRLF-Report* to the global cell identity, if available, otherwise to the physical cell identity and carrier frequency of the selected cell;
   2> apply the stored *condRRCReconfig* associated to the selected cell and perform actions as specified in 5.3.5.3;
   NOTE 1: It is left to network implementation to how to avoid keystream reuse in case of CHO based recovery after a failed handover without key change
1> else:
   2> if UE is configured with *attemptCondReconfig:*
      3> reset MAC;
      3> release *spCellConfig,* if configured;
      3> release the MCG SCell(s), if configured;
      3> release *delayBudgetReportingConfig,* if configured and stop timer T342, if running;
      3> release *overheatingAssistanceConfig,* if configured and stop timer T345, if running;
      3> if MR-DC is configured:
         4> perform MR-DC release, as specified in clause 5.3.5.10;
      3> release *idc-AssistanceConfig,* if configured;
      3> release *btNameList,* if configured;
      3> release *wlanNameList,* if configured;
      3> release *sensorNameList,* if configured;
      3> release *drx-PreferenceConfig* for the MCG, if configured and stop timer T346a associated with the MCG, if running;
      3> release *maxBW-PreferenceConfig* for the MCG, if configured and stop timer T346b associated with the MCG, if running;
      3> release *maxCC-PreferenceConfig* for the MCG, if configured and stop timer T346c associated with the MCG, if running;
      3> release *maxMIMO-LayerPreferenceConfig* for the MCG, if configured and stop timer T346d associated with the MCG, if running;
      3> release *minSchedulingOffsetPreferenceConfig* for the MCG, if configured and stop timer T346e associated with the MCG, if running;
      3> release *rlm-RelaxationReportingConfig* for the MCG, if configured and stop timer T346j associated with the MCG, if running;
      3> release *bfd-RelaxationReportingConfig* for the MCG, if configured and stop timer T346k associated with the MCG, if running;
      3> release *releasePreferenceConfig,* if configured and stop timer T346f, if running;
      3> release *onDemandSIB-Request if* configured, and stop timer T350, if running;
      3> release referenceTimePreferenceReporting, if configured;
      3> release *sl-AssistanceConfigNR,* if configured;
      3> release *obtainCommonLocation,* if configured;
      3> release *scg-DeactivationPreferenceConfig,* if configured, and stop timer T346i, if running;
      3> release *musim-GapAssistanceConfig,* if configured and stop timer T346h, if running;
      3> release *musim-LeaveAssistanceConfig,* if configured;
      3> release *propDelayDiffReportConfig,* if configured;
      3> release *ul-GapFR2-PreferenceConfig,* if configured;
      3> release *rrm-MeasRelaxationReportingConfig,* if configured;
      3> release *maxBW-PreferenceConfigFR2-2,* if configured;
      3> release *maxMIMO-LayerPreferenceConfigFR2-*2, if configured;
      3> release
         *minSchedulingOffsetPreferenceConfigExt,* if configured;
      3> suspend all RBs, and BH RLC channels for the IAB-MT, except SRB0 and broadcast MRBs;
   2> remove all the entries within the MCG *VarConditionalReconfig,* if any;
   2> for each *measld,* if the associated *reportConfig* has a *reportType* set to *condTriggerConfig:*
      3> for the associated *reportConfigld:*
         4> remove the entry with the matching *reportConfigId* from the *reportConfigList* within the *VarMeasConfig;*
      3> if the associated *measObjectId* is only associated to a *reportConfig* with *reportType* set to *condTriggerConfig:*
         4> remove the entry with the matching *measObjectId* from the *measObjectList* within the *VarMeasConfig*
      3> remove the entry with the matching *measId* from the *measldList* within the *VarMeasConfig*;
   2> release the PC5 RLC entity for SL-RLC0, if any;
   2> start timer T301;
   2> apply the default L1 parameter values as specified in corresponding physical layer specifications except for the parameters for which values are provided in *SIB1*;
   2> apply the default MAC Cell Group configuration as specified in 9.2.2;
   2> apply the CCCH configuration as specified in 9.1.1.2;
   2> apply the *timeAlignmentTimerCommon* included in *SIB1*;
   2> initiate transmission of the *RRCReestablishmentRequest* message in accordance with 5.3.7.4;
   NOTE 2: This procedure applies also if the UE returns to the source PCell.
Upon selecting an inter-RAT cell, the UE shall:
1> perform the actions upon going to RRC_IDLE as specified in 5.3.11, with release cause 'RRC connection failure'.

The disclosure proposes releasing flight information assistance configuration information (flightPath-AssistanceConfig) configured in operation 1g-20 in the procedure below when the UE performs operation 1g-35. In addition, the disclosure proposes, if the UE is running timer Txxx with a value of flightPath-AssistanceProhibitTimer configured by the flight information assistance configuration information (flightPath-AssistanceConfig), stopping the timer. For example, the proposed operation may be performed according to the following procedure.
1> ensure having valid and up to date essential system information as specified in clause 5.2.2.2;
1> stop timer T311;
1> if T390 is running:
   2> stop timer T390 for all access categories;
   2> perform the actions as specified in 5.3.14.4;
1> stop the relay (re)selection procedure, if ongoing;
1> if the cell selection is triggered by detecting radio link failure of the MCG or re-configuration with sync failure of the MCG or mobility from NR failure, and
1> if *attemptCondReconfig* is configured; and
1> if the selected cell is not configured with *CondEventT1,* or the selected cell is configured with *CondEventT1* and leaving condition has not been fulfilled; and
1> if the selected cell is one of the candidate cells for which the *reconfigurationWithSync* is included in the *masterCellGroup* in the MCG *VarConditionalReconfig*:
   2> if the UE supports RLF-Report for conditional handover, set the *choCellId* in the *VarRLF-Report* to the global cell identity, if available, otherwise to the physical cell identity and carrier frequency of the selected cell;
   2> apply the stored *condRRCReconfig* associated to the selected cell and perform actions as specified in 5.3.5.3;
   NOTE 1: It is left to network implementation to how to avoid keystream reuse in case of CHO based recovery after a failed handover without key change.
1> else:
   2> if UE is configured with *attemptCondReconfig:*
   ... 3> release *flightPath-AssistanceConfig,* if configured and stop timer Txxx, if running;

In operation 1g-40, the UE 1g-01 may transmit an RRC connection reestablishment request message to the base station 1g-02. In response to the message, the base station 1g-02 may transmit (operation 1g-45) an RRC connection reestablishment message (RRCReestablishment) to the UE. The UE 1g-01 having received the RRC connection re-establishment message may apply the same, transmit (operation 1g-50) an RRC connection re-establishment completion message (RRCReestablishmentComplete) to the base station 1g-02, and successfully perform an RRC connection re-establishment procedure.

The disclosure proposes releasing flight information assistance configuration information (flightPath-AssistanceConfig) configured for the UE 1g-01 in operation 1g-20 when or while performing the RRC connection re-establishment procedure. The disclosure additionally proposes, if the UE is running timer Txxx with a value of flightPath-AssistanceProhibitTimer configured by the flight information assistance configuration information (flightPath-AssistanceConfig), stopping the timer. This is because the UE 1g-01 performs a cell selection process during the RRC connection re-establishment procedure and thus a newly selected cell and the base station 1g-02 in operation 1g-20 may be different. For example, for the newly selected cell, flightPath-AssitanceConfig may be configured with another value, or the newly selected cell may not be supported to configure flightPath-AssistanceConfig, which thus allows the UE to perform a subsequent operation according to configuration of the newly selected cell. If not, the UE may unnecessarily transmit a UE assistance information message or may transmit the UE assistance information message including wrong information to a new cell.

FIG. 1H illustrates a method in which an uncrewed aerial vehicle (UAV) UE manages flight information assistance configuration information (flightPath-AssistanceConfig) in a next-generation mobile communication system according to an embodiment of the disclosure.

Referring to FIG. 1H, a UE 1h-01 may configure an RRC connection with a base station 1h-02 and may be in an RRC-connected mode (RRC_CONNECTED) (operation 1h-05).

In operation 1h-10, the UE 1h-01 in the RRC-connected mode may transmit, to the base station 1h-01, a UE capability information message (UECapabilityInformation) including an indicator indicating a capability of reporting or updating flight path information. This may correspond to operation 1f-15 in the above-described embodiment.

In operation 1h-20, the base station 1h-02 may configure otherConfig to the UE 1h-01 through a predetermined RRC message. For example, the predetermined RRC message may mean an RRC connection reconfiguration message (RRCReconfiguration) or an RRC resumption message (RRCResume). The otherConfig may include flight information assistance configuration information (flightPath-AssistanceConfig). This may correspond to operation 1f-20 in the above-described embodiment.

In operation 1h-25, the base station 1h-02 may transmit, to the UE 1h-01, an RRC connection release message (RRCRelease) including suspension configuration information (suspendConfig). The disclosure proposes storing flight information configuration information configured in operation 1h-02 in UE inactive AS context by the UE 1h-01. This is for promptly applying and using the same through the subsequent RRC connection release procedure.

In operation 1h-30, the UE 1h-01 may transition to an RRC inactive mode (RRC_INACTIVE).

In operation 1h-35, the UE 1h-01 in the RRC inactive mode may initiate an RRC connection resumption procedure. The disclosure proposes releasing, by the UE 1h-01, flight information configuration information stored in the UE inactive AS context during the RRC connection resumption procedure. In addition, the disclosure proposes, if timer Txxx is running according thereto, stopping the timer by the UE 1h-01. The UE 1h-01 may transmit an RRC connection resumption request message (RRCResumeRequest or RRCResumeRequest1) to the base station 1h-02.

In operation 1h-40, the base station 1h-02 may transmit an RRC connection resumption message (RRCResume) to the UE 1h-01.

In operation 1h-45, the UE 1h-01 may transmit an RRC connection resumption completion message (RRCResumeComplete) to the base station 1h-02.

The disclosure proposes storing flight information assistance information (flightPath-AssistanceConfig) in the UE inactive AS context and transitioning to an RRC inactive mode by the UE 1h-01, and releasing the flight information assistance configuration information stored in the UE inactive AS context by the UE 1h-01 during the RRC connection resumption procedure (if timer Txxx according thereto is running, stopping the timer). The disclosure proposes releasing the information by the UE 1h-01 during the RRC connection resumption procedure, but the UE may not release the same during the RRC connection resumption procedure according to indication (system information or RRC connection release message) of the base station 1h-02.

FIG. 1I illustrates a procedure of exchanging, between base stations, flight path information (FlightPathReport) transmitted by an uncrewed aerial vehicle (UAV) UE in a next-generation mobile communication system according to an embodiment of the disclosure.

Referring to FIG. 1I, a UE 1i-01 may configure an RRC connection with a base station 1i-01 and in an RRC-connected mode (RRC_CONNECTED) (operation 1i-05). In the disclosure, the base station is called a master node base station (hereinafter, referred to as MN).

In operation 1i-10, if the UE 1i-01 has flight path information (if the UE has flight path information available), the UE 1i-01 may transmit, to an MN base station 1i-02 through one of the following RRC messages, an indicator (flightPathInfoAvailable) indicating that flight path information is available.
- RRC setup completion message (RRCSetupComplete)
- RRC resumption completion message (RRCResumeComplete)
- RRC re-establishment completion message (RRCReestablishmentComplete)
- RRC re-configuration completion message (RRCReconfigurationComplete)

In operation 1i-11, the UE 1i-01 in the RRC-connected mode may transmit, to the MN base station 1i-02, a UE capability information message (UECapabilityInformation) including an indicator indicating a capability of reporting or updating flight path information. This may correspond to operation 1f-15 or 1e-10 in the above-described embodiment.

In operation 1i-12, the MN base station 1i-02 may configure otherConfig to the UE 1i-01 through a predetermined RRC message. For example, the predetermined RRC message may mean an RRC connection reconfiguration message (RRCReconfiguration) or an RRC resumption message (RRCResume). The otherConfig may include flight information assistance configuration information (flightPath-AssistanceConfig). This may correspond to operation 1f-20 in the above-described embodiment.

In operation 1i-13, a secondary node (SN) (hereinafter, referred to as SN) base station (1i-03) may be added, and dual connectivity (hereinafter, referred to as DC) may be configured for the UE 1i-01.

In operation 1i-15, the MN base station 1i-02 may transmit a UE information request message (UEInformationRequest) to the UE 1i-01. The UE information request message may include flightPathInfoReq information. The flightPathInfoReq information may include at least one of the following pieces of information.
- includeTimeStamp: indicates whether time stamp of each way point can be reported in the flight path information report if time stamp information is available at the UE.
- maxWayPointNumber: indicates the maximum number of way points UE can include in the flight path information report if this information is available at the UE.

In operation 1i-20, if the UE information request message received in operation 1i-15 includes flightPathInfoReq information and the UE has flight path information (the has flight path information available), the UE 1i-01 may transmit a UE information response message (UEInformationResponse) including flightPathInfoReport to the MN base station 1i-02. The UE information response message may include one or more WayPointLocations. If the includeTimeStamp is set to TRUE, the UE 1i-01 may include information on the time when the UE intends to arrive for each waypoint in the message (if the includeTimeStamp is set to TRUE, the UE sets the field timeStamp to the time when UE intends to arrive to each waypoint if this information is available at the UE).

In operation 1i-25, the MN base station 1i-02 may transmit flightPathInfoReport received from the UE 1i-01 to the source SN base station 1i-03 in operation 1i-20. The disclosure proposes transmitting flightPathInfoReport retrieved from the UE to the source SN base station 1i-03 by the MN base station 1i02 through a predetermined inter-node message or an Xn message. The source SN base station 1i-03 may select a target SN cell to be changed later or determine whether to release a current SN base station through flightPathInfoReport.

In operation 1i-30, the source SN base station 1i-03 may transmit an SN change required message to the MN base station 1i-02 to change the SN base station. For example, the determination of the change of the SN base station may be performed based on the flightPathInfoReport received in operation 1i-30.

In operation 1i-35, the MN base station 1i-02 may transmit an SN addition request message to a target SN base station 1i-04.

In operation 1i-40, the target SN base station 1i-04 may transmit an SN addition request acknowledge message including configuration information required for changing the SN base station to the MN base station 1i-02.

In operation 1i-50, the UE 1i-01 may change the SN base station by successfully performing the RRC connection reconfiguration procedure to the target SN base station 1i-04. DC is configured for the UE 1i-01 with the MN base station 1i-02 and the target SN base station 1i-04.

FIG. 1J illustrates a procedure in which an uncrewed aerial vehicle (UAV) UE reports flight path information to the base station in a next-generation mobile communication system according to an embodiment of the disclosure.

Referring to FIG. 1J, a UE 1j-01 may configure an RRC connection with a base station 1j-02 and may be in an RRC-connected mode (RRC_CONNECTED) (operation 1j-05).

In operation 1j-10, if the UE 1j-01 has flight path information (if the UE has flight path information available), the UE may transmit, to a base station 1j-02 through at least one of the following RRC messages, an indicator (flightPathInfoAvailable) indicating that flight path information is available.
- RRC setup completion message (RRCSetupComplete)
- RRC resumption completion message (RRCResumeComplete)
- RRC re-establishment completion message (RRCReestablishmentComplete)
- RRC re-configuration completion message (RRCReconfigurationComplete)

In operation 1j-15, the UE 1j-01 in the RRC-connected mode may transmit a UE capability information message (UECapabilityInformation) to the base station 1j-2. The UE capability information message may include an indicator indicating that the flight path information can be reported. This may correspond to operation 1e-10 or 1f-15 in the above-described embodiment. In addition, the UE capability information message may also include information on a capability to transmit an indicator indicating that the UE information response message includes additional flight path information to be transmitted when the flight path information is reported.

In operation 1f-10, if the UE 1j-01 has flight path information (if the UE has flight path information available), the UE 1j-01 may transmit an indicator (flightPathInfoAvailable) indicating that flight path information is available to the base station 1f-02 through at least one of the following RRC messages.
RRC setup completion message (RRCSetupComplete)
RRC resumption completion message (RRCResumeComplete)
RRC re-establishment completion message (RRCReestablishmentComplete)
RRC re-configuration completion message (RRCReconfigurationComplete)

In operation 1j-20, the base station 1j-02 may transmit a UE information request message (UEInformationRequest) to the UE 1j-01. The UE information request message may include flightPathInfoReq information. The flightPathInfoReq information may include at least one of the following pieces of information.
- includeTimeStamp: indicates whether time stamp of each way point can be reported in the flight path information report if time stamp information is available at the UE.
- maxWayPointNumber: indicates the maximum number of way points UE can include in the flight path information report if this information is available at the UE.
- includeMoreFlightPath: is an indicator or an information element indicating whether, if flight path information cannot be all stored in the UE information response message, the flight path information which fails to be transmitted can be transmitted through an additional UE information response message.

In operation 1j-25, if flightPathInfoReq information is included in the UE information request message received in operation 1h-20 and the UE 1j-01 has flight path information (if the UE has flight path information available), the UE 1j-01 may transmit a UE information response message (UEInformationResponse) including flightPathInfoReport to the base station 1j-02. The message may include one or more WayPointlocations. If the includeTimeStamp is set to TRUE, the UE 1j-01 may include information on the time when the UE intends to arrive for each waypoint in the message (if the includeTimeStamp is set to TRUE, the UE sets the field timeStamp to the time when UE intends to arrive to each waypoint if this information is available at the UE). The disclosure proposes, if flight path information to be transmitted cannot be all stored in the UEInformationResponse message, including only the storable flight path information and including an indicator indicating there is still flight path information to be transmitted in the UEInformationResponse message by the UE 1j-01. In addition, if includeMoreFlightPath is configured in operation 1j-20, the UE 1j-01 may subsequently transmit the remaining pieces of flight path information to the base station 1j-02 through a UEInformationResponse message or a UE assistance information message. In this case, if flight path information to be transmitted is no longer available, the indicator described in operation 1j-25 above may not be separately included, or an indicator indicating that flight path information to be transmitted is no longer available can be included.

In operation 1j-30, the base station 1j-02 may transmit a UE information request message (UEInformationRequest) to the UE 1j-01.

In operation 1j-35, if the UE information request message received in operation 1j-20 includes flightPathInfoReq information and the UE 1j-01 has flight path information (if the UE has flight path information available), the UE 1j-01 may transmit a UE information response message (UEInformationResponse) including flightPathInfoReport to the base station 1j-02. The UE information response message may include only flight path information which has failed to be stored in operation 1j-25. If the UE information response message does not include flight path information to be transmitted, the indicator described in operation 1j-25 above may not be separately included, or an indicator indicating that flight path information to be transmitted is no longer available can be included.

FIG. 1K illustrates a procedure in which an uncrewed aerial vehicle (UAV) UE reports flight path information to a base station in a next-generation mobile communication system according to an embodiment of the disclosure.

Referring to FIG. 1K, a UE 1k-01 may configure an RRC connection with a base station 1k-02 and may be in an RRC-connected mode (RRC_CONNECTED) (operation 1k-05).

In operation 1k-10, if the UE 1k-01 has flight path information (if the UE has flight path information available), the UE may transmit, to a base station 1k-02 through at least one of the following RRC messages, an indicator (flightPathInfoAvailable) indicating that flight path information is available.
- RRC setup completion message (RRCSetupComplete)
- RRC resumption completion message (RRCResumeComplete)
- RRC re-establishment completion message (RRCReestablishmentComplete)
- RRC re-configuration completion message (RRCReconfigurationComplete)

In operation 1k-15, the UE 1k-10 in the RRC-connected mode may transmit a UE capability information message to the base station 1k-02. This may correspond to operation 1j-10, 1e-10, or 1f-15 in the above-described embodiment. In addition, the UE capability information message may include capability information relating to whether UL DCCH segmentation of the UEInformationResponse message is supported. For reference, the capability information relating to whether UL DCCH segmentation of the UEInformationResponse message is supported may be included in another predetermined UL RRC message.

In operation 1k-20, the base station 1k-02 may transmit a UE information request (UEInformationRequest) to the UE 1k-01. The UE information request message may include flightPathInfoReq information. The flightPathInfoReq information may include at least one of the following pieces of information.
- includeTimeStamp: indicates whether time stamp of each way point can be reported in the flight path information report if time stamp information is available at the UE.
- maxWayPointNumber: indicates the maximum number of way points UE can include in the flight path information report if this information is available at the UE.
- rrcSegAllowed: indicates an indicator indicating that if flight path information is not all stored in a UE information response message, the message can be segmented and transmitted.

In operation 1k-25, if flightPathInfoReq information is included in the UE information request message received in operation 1k-20 and the UE has flight path information, the UE 1k-01 may transmit a UE information response (UEInformationResponse) including flightPathInfoReport to the base station 1k-02. The UE information response message may include one or multiple WayPointLocations. If the includeTimeStamp is set to TRUE, the UE 1j-01 may include information on the time when the UE intends to arrive for each waypoint in the message (if the includeTimeStamp is set to TRUE, the UE sets the field timeStamp to the time when UE intends to arrive to each waypoint if this information is available at the UE). In the disclosure, if flight path information to be transmitted cannot be all stored in the UEInformationResponse message, the UE 1k-01 may transmit the flight path information to the base station 1k-02 through ULDedicatedMessageSegment. Specifically, the UE 1k-01 may transmit the flight path information to the base station through the following procedure.

### 5.7.7.2 Initiation

A UE capable of UL RRC message segmentation in RRC_CONNECTED will initiate the procedure when the following conditions are met:
1> if the RRC message segmentation is enabled based on the field *rrc-SegAllowed* received, and
1> if the encoded RRC message is larger than the maximum supported size of a PDCP SDU specified in TS 38.323 [5];
Upon initiating the procedure, the UE shall:
1> initiate transmission of the *ULDedicatedMessageSegment* message as specified in 5.7.7.3;
5.7.7.3 Actions related to transmission of *ULDedicatedMessageSegment* message
The UE shall segment the encoded RRC PDU based on the maximum supported size of a PDCP SDU specified in TS 38.323 [5]. UE shall minimize the number of segments and set the contents of the *ULDedicatedMessageSegment* messages as follows:
1> F or each new UL DCCH message, set the *segmentNumber* to 0 for the first message segment and increment the *segmentNumber* for each subsequent RRC message segment;
1> set *rrc-MessageSegmentContainer* to include the segment of the UL DCCH message corresponding to the *segmentNumber*;
1> if the segment included in the *rrc-MessageSegmentContainer* is the last segment of the UL DCCH message:
   2> set the rrc-MessageSegmentType to lastSegment;
1> else:
   2> set the *rrc-MessageSegmentType* to *notLastSegment;*
1> submit all the *ULDedicatedMessageSegment* messages generated for the segmented RRC message to lower layers for transmission in ascending order based on the *segmentNumber,* upon which the procedure ends.

FIG. 1L is a block diagram illustrating a structure of a UE according to an embodiment of the disclosure.

Referring to the drawing, the UE may include a radio frequency (RF) processor 1l-10, a baseband processor 1l-20, a storage unit 1l-30, and a controller 1l-40. Of course, the example given above is not limiting, and the UE may include a smaller or larger number of components than the components illustrated in FIG. 1L.

The RF processor 1l-10 may perform a function for transmitting and receiving a signal via a wireless channel, such as band conversion and amplification of the signal. That is, the RF processor 1l-10 may up-convert a baseband signal provided from the baseband processor 1l-20 to an RF band signal, may transmit the same through an antenna, and may down-convert an RF band signal received through the antenna to a baseband signal. For example, the RF processor 1l-10 may include a transmission filter, a reception filter, an amplifier, a mixer, an oscillator, a digitalto-analog converter (DAC), an analog-to-digital converter (ADC), and the like. Although only one antenna is illustrated in FIG. 1l, the UE may include multiple antennas. Furthermore, the RF processor 1l-10 may include a plurality of RF chains. Moreover, the RF processor 1l-10 may perform beamforming. To perform beamforming, the RF processor 1l-10 may adjust the phase and size of each of the signals transmitted or received through a plurality of antennas or antenna elements. In addition, the RF processor 1l-10 may perform MIMO, and may receive several layers when a MIMO operation is performed.

The baseband processor 1l-20 may perform functions of conversion between baseband signals and bitstrings according to the system's physical layer specifications. For example, at the time of data transmission, the baseband processor 1l-20 may generate complex symbols by encoding and modulating a transmission bitstream. In addition, at the time of data reception, the baseband processor 1l-20 may reconstruct a reception bitstream by demodulating and decoding a baseband signal provided from the RF processor 1l-10. For example, in a case where an orthogonal frequency division multiplexing (OFDM) scheme is applied, at the time of data transmission, the baseband processor 1l-20 may generate complex symbols by encoding and modulating a transmission bitstream, map the complex symbols to subcarriers, and then configure OFDM symbols through inverse fast Fourier transform (IFFT) calculation and cyclic prefix (CP) insertion. In addition, during data reception, the baseband processor 1l-20 may split a baseband signal provided from the RF processor 1l-10 at the OFDM symbol level, may restore signals mapped to subcarriers through a fast Fourier transform (FFT) operation, and may restore a received bitstring through demodulation and decoding.

The baseband processor 1l-20 and the RF processor 1l-10 may transmit and receive signals as described above. Accordingly, the baseband processor 1l-20 and the RF processor 1l-10 may be called a transmitter, a receiver, a transceiver, or a communication unit. Furthermore, at least one of the baseband processor 1l-20 and the RF processor 1l-10 may include a plurality of communication modules to support a plurality of different wireless access technologies. In addition, at least one of the baseband processor 1l-20 and the RF processor 1l-10 may include different communication modules to process signals of different frequency bands. For example, the different radio access technologies may include a wireless LAN (e.g., IEEE 802.11), a cellular network (e.g., LTE), and the like. In addition, the different frequency bands may include super high frequency (SHF) (e.g., 2.NRHz) bands and millimeter wave (mmWave) (e.g., 60GHz) bands. The UE may transmit/receive signals with the base station by using the baseband processor 1l-20 and the RF processor 1l-10, and the signals may include control information and data.

The storage unit 1l-30 may store data such as a basic program, an application, or configuration information for the operation of the UE. Particularly, the storage unit 1l-30 may store information related to a second access node that performs wireless communication by using a second wireless access technology. In addition, the storage unit 1l-30 provides the stored data at the request of the controller 1l-40. The storage unit 1l-30 may be configured by a storage medium such as a ROM, a RAM, a hard disk, a CD-ROM, and a DVD, or a combination of storage media. In addition, the storage unit 1l-30 may be configured by a plurality of memories. According to an embodiment, the storage unit 1l-30 may store programs for performing the method for updating a flight path as described above.

The controller 1l-40 may control the overall operation of the UE. For example, the controller 1l-40 may transmit/receive signals through the baseband processor 1l-20 and the RF processor 1l-10. In addition, the controller1l-40 records data in the storage unit 1l-30 and reads the data from the storage unit 1l-30. To this end, the controller 1l-40 may include at least one processor. For example, the controller 1l-40 may include a communication processor (CP) performing control for communication, and an application processor (AP) controlling a higher layer, such as an application program. In addition, at least one component in the UE may be implemented as a single chip. Furthermore, according to an embodiment of the disclosure, the controller 1l-40 may include a multi-connection processor 1l-45 which performs processing for operation in a multi-connection mode.

According to an embodiment of the disclosure, the controller 1l-40 may control the components of the UE to perform the method for updating a flight path as described above. That is, the respective components of the UE may be operated to perform the above-described embodiments of the disclosure.

FIG. 1M illustrates a structure of a base station according to an embodiment of the disclosure.

As illustrated in FIG. 1M, the base station may include an RF processor 1m-10, a baseband processor 1m-20, a backhaul communication unit 1m-30, a storage unit 1m-40, and a controller 1m-50. Of course, the example given above is not limiting, and the base station may include a smaller or larger number of components than the components illustrated in FIG. 1M.

The RF processor 1m-10 may perform a function for transmitting and receiving a signal via a wireless channel, such as band conversion and amplification of the signal. That is, the RF processor 1m-10 may up-convert a baseband signal provided from the baseband processor 1m-20 to an RF band signal, may transmit the same through an antenna, and may down-convert an RF band signal received through the antenna to a baseband signal. For example, the RF processor 1m-10 may include a transmission filter, a reception filter, an amplifier, a mixer, an oscillator, a DAC, and an ADC. Although only one antenna is illustrated in the drawing, the first access node may include multiple antennas. In addition, the RF processor 1m-10 may include a plurality of RF chains. Furthermore, the RF processor 1m-10 may perform beamforming. For the beamforming, the RF processor 1m-10 may adjust the phase and magnitude of each of signals transmitted and received through multiple antennas or antenna elements. The RF processor may perform down-MIMO operations by transmitting one or more layers.

The baseband processor 1m-20 may perform functions of conversion between baseband signals and bitstrings according to the physical layer specifications of first radio access technology. For example, during data transmission, the baseband processor 1m-20 may encode and modulate a transmitted bitstring to generate complex symbols. In addition, during data reception, the baseband processor 1m-20 may demodulate and decode a baseband signal provided from the RF processor 1m-10 to restore a received bitstring. For example, when following the OFDM scheme, during data transmission, the baseband processor 1j-20 may encode and modulate a transmitted bitstring to generate complex symbols, may map the complex symbols to subcarriers, and may configure OFDM symbols through an IFFT operation and CP insertion. In addition, during data reception, the baseband processor 1m-20 may split a baseband signal provided from the RF processor 1m-10 at the OFDM symbol level, may restore signals mapped to subcarriers through FFT operation, and may restore a received bitstring through demodulation and decoding. The baseband processor 1m-20 and the RF processor 1m-10 may transmit and receive signals as described above. Accordingly, the baseband processor 1m-20 and the RF processor 1m-10 may be called a transmitter, a receiver, a transceiver, a communication unit, or a wireless communication unit. The base station may transmit/receive a signal with the UE by using the baseband processor 1m-20 and the RF processor 1m-10, and the signal may include control information and data.

The backhaul communication unit 1m-30 may provide an interface for communicating with other nodes in the network. That is, the backhaul communication unit 1m-30 may convert bitstrings transmitted from the main base station to other nodes, for example, an auxiliary base station or a core network, to physical signals, and may convert physical signals received from the other nodes to bitstrings.

The storage unit 1m-40 stores data, such as a default program, an application, and setting information, for the operation of the base station. Particularly, the storage unit 1m-40 may store information regarding a bearer allocated to a connected UE, a measurement result reported from the connected UE, and the like. In addition, the storage unit 1m-40 may store information serving as a reference to determine whether to provide multi-connection to a UE or to suspend the same. The storage unit 1m-40 may provide stored data in response to a request of the controller 1m-50. In addition, the storage unit 1m-40 provides the stored data at the request of the controller 1m-50. The storage unit 1m-40 may be configured by storage media such as a ROM, a RAM, a hard disk, a CD-ROM, and a DVD, or a combination of storage media. addition, the storage unit 1m-40 may be configured by a plurality of memories. According to an embodiment, the storage unit 1m-40 may store programs for performing the method fir updating a flight path as described above.

The controller 1m-50 controls the overall operation of the base station. For example, the controller 1m-50 may transmit/receive signals through the baseband processor 1m-20 and the RF processor 1m-10 or through the backhaul communication unit 1m-30. In addition, the controller 1m-50 records data in the storage unit 1m-40 and reads the data from the storage 1m-40. To this end, the controller 1m-50 may include at least one processor. In addition, at least one component in the base station may be implemented as a single chip. In addition, the respective components of the base station may be operated to perform the above-described embodiments of the disclosure.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
transmitting, to a base station, a user assistance information (UAI) message comprising information indicating that flight path information is available;
receiving, from the base station, a first message for requesting the flight path information; and
transmitting, to the base station, a second message for reporting the flight path information.

2. The method of claim 1, further comprising transmitting, to the base station, an RRC complete message,
wherein the flight path information is one of initial flight path information and updated flight path information, based on the information indicating that the flight path information is available.

3. The method of claim 1, further comprising transmitting, to the base station, terminal capability information indicating whether the terminal can report the flight path information by using the UAI message.

4. The method of claim 1, further comprising receiving, from the base station, configuration information comprising a threshold value related to the flight path information,
wherein the UAI message is transmitted based on a condition related to the threshold value.

5. A method performed by a base station in a wireless communication system, the method comprising:
receiving, from a terminal, a user assistance information (UAI) message comprising information indicating that flight path information is available;
transmitting, to the terminal, a first message for requesting the flight path information; and
receiving, from the terminal, a second message for reporting the flight path information.

6. The method of claim 5, further comprising receiving, from the terminal, an RRC complete message,
wherein the flight path information is one of initial flight path information and updated flight path information, based on the information indicating that the flight path information is available.

7. The method of claim 5, further comprising receiving, from the terminal, terminal capability information indicating whether the terminal can report the flight path information by using the UAI message.

8. The method of claim 5, further comprising transmitting, to the terminal, configuration information comprising a threshold value related to the flight path information,
wherein the UAI message is received based on a condition related to the threshold value.

9. A terminal in a wireless communication system, the terminal comprising:
a transceiver; and
a controller coupled with the transceiver,
wherein the controller is configured to:
transmit, to a base station, a user assistance information (UAI) message comprising information indicating that flight path information is available;
receive, from the base station, a first message for requesting the flight path information; and
transmit, to the base station, a second message for reporting the flight path information.

10. The terminal of claim 9, wherein the controller is configured to transmit, to the base station, an RRC complete message, and
wherein the flight path information is one of initial flight path information and updated flight path information, based on the information indicating that the flight path information is available.

11. The terminal of claim 9, wherein the controller is configured to transmit, to the base station, terminal capability information indicating whether the terminal can report the flight path information by using the UAI message.

12. The terminal of claim 9, wherein the controller is configured to receive, from the base station, configuration information comprising a threshold value related to the flight path information, and
wherein the UAI message is transmitted based on a condition related to the threshold value.

13. A base station in a wireless communication system, the base station comprising:
a transceiver; and
a controller coupled with the transceiver,
wherein the controller is configured to:
receive, from a terminal, a user assistance information (UAI) message comprising information indicating that flight path information is available;
transmit, to the terminal, a first message for requesting the flight path information; and
receive, from the terminal, a second message for reporting the flight path information.

14. The base station of claim 13, wherein the controller is configured to receive, from the terminal, an RRC complete message, and
wherein the flight path information is one of initial flight path information and updated flight path information, based on the information indicating that the flight path information is available.

15. The base station of claim 13, wherein the controller is configured to:
receive, from the terminal, terminal capability information indicating whether the terminal can report the flight path information by using the UAI message; and
transmit, to the terminal, configuration information comprising a threshold value related to the flight path information, and
wherein the UAI message is received based on a condition related to the threshold value.
